# EUROPÄISCHE PATENTSCHRIFT

(11) **EP 1 772 332 B1**
(45) Veröffentlichungstag und Bekanntmachung des Hinweises auf die Patenterteilung: **08.08.2012**
(21) Anmeldenummer: 04022356.2
(22) Anmeldetag: 20.09.2004
(51) Int. Cl.: B60S 1/04

(54) **Anordnung eines Scheibenwischers an einem Fahrzeug**
Arrangement of a wiper on the vehicle
DISPOSITION D'ESSUIE-GLACE SUR UN AUTOMOBILE

(43) Veröffentlichungstag der Anmeldung: 11.04.2007
(73) Patentinhaber: MAN Truck & Bus AG, 80995 München (DE)
(72) Erfinder: Apitz, Christoph, 71384 Weinstadt (DE)

(56) Entgegenhaltungen:
- FR-A- 2 673 408
- GB-A- 1 448 892
- US-A- 2 040 966
- PATENT ABSTRACTS OF JAPAN Bd. 2003, Nr. 12, 5. Dezember 2003 (2003-12-05) -& JP 2004 074940 A (YANMAR AGRICULT EQUIP CO LTD), 11. März 2004 (2004-03-11)
- PATENT ABSTRACTS OF JAPAN Bd. 2000, Nr. 10, 17. November 2000 (2000-11-17) -& JP 2000 203258 A (ISEKI & CO LTD), 25. Juli 2000 (2000-07-25)
- PATENT ABSTRACTS OF JAPAN Bd. 1999, Nr. 12, 29. Oktober 1999 (1999-10-29) -& JP 11 198766 A (TOYOTA AUTO BODY CO LTD), 27. Juli 1999 (1999-07-27)
- Popular Science: "1978 Colani Truck 2001", Popular Science, vol. January 1978 30 January 1978 (1978-01-30), Retrieved from the Internet: URL:http://www.popsci.com/archive-viewer?i d=lwAAAAAAMBAJ&pg=66&query=colani+truck

## Beschreibung

Die Erfindung betrifft eine Anordnung eines Scheibenwischers an einem Fahrzeug, welche einen Tragarm aufweist, der am proximalen Ende am Fahrzeugdach angebracht ist und am distalen Ende freitragend eine Drehachse des Scheibenwischers aufweist, wobei die Drehachse die zu wischende Scheibe durch eine Aussparung durch die Scheibe durchdringt.

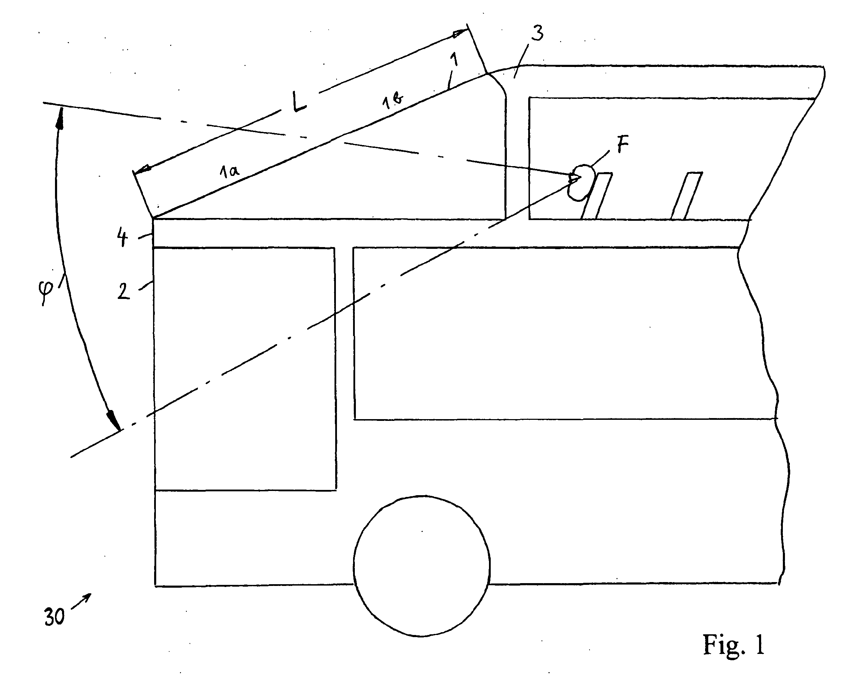

Bei einem Fahrzeug wie z.B. einem Omnibus kann im Dachbereich eine sehr flach geneigte Scheibe vorgesehen sein, welche eine Scheibenlänge von ca. 2 m aufweist. Ist eine derartige Scheibe mit einem Wischerarm zu reinigen, so sind mehrere Probleme zu lösen. Übliche Wischerarmlängen betragen etwa 1 m, so dass bei einer Montage des Wischerarms im Bereich des oberen Scheibenrandes oder des unteren Scheibenrandes eine Scheibe mit der genannten Länge von etwa 2 m nicht vollständig gereinigt werden kann. Wird ein Wischerarm im Bereich des Fahrzeugdaches 3 gelagert, siehe Figur 1, so müsste er eine Wischerarmlänge aufweisen, welche etwa die Länge L der Scheibenlänge beträgt. Ein Wischerarm mit einer solchen Länge ist jedoch üblicherweise nicht verfügbar. Wird der Wischerarm mit einer üblichen Länge von ca. 1 m im Bereich des vorderen Karosserierahmens 4 zwischen Scheibe 1 und Fahrerscheibe 2 gelagert, so dass der Wischerarm den vorderen Bereich 1a der Scheibe 1 wischen kann (Wischerarmspitze ist gegen Fahrrichtung gerichtet), so wird der hintere Bereich 1b der Scheibe 1 nicht erreicht. Dieser Nachteil mag jedoch von geringer Bedeutung sein, da das Sichtfeld ϕ eines Fahrgastes F von seinem Augenpunkt aus gesehen den hinteren Bereich 1b der Fahrzeugscheibe 1 nicht mehr erfasst. Wird ein Scheibenwischerarm zwischen der Scheibe 1 und der Fahrerscheibe 2 am Karosserierahmen 4 befestigt, kann somit der für das Sichtfeld ϕ relevante Anteil 1a der Scheibe 1 gereinigt und gewischt werden. Problematisch hierbei ist jedoch, dass die Lagervorrichtung des Scheibenwischers einschließlich Antriebsmotor und Antriebsgestänge in den Fahrgastraum hineinragt. Diese Baugruppen können zwar mit einer Abdeckung abgedeckt werden, liegen jedoch genau im Sichtfeld ϕ des Fahrgastes 5. Aus optischen Gründen wird dies als nachteilig bewertet.

Aus der JP -A-2004074940 ist eine Scheibenwischervorrichtung bekannt bei der die Scheibenwischvorrichtung im unteren Randbereich einer Scheibe angeordnet ist, wobei die Drehachse der Scheibenwischvorrichtung die zu reinigende Scheibe durchdringt.

Aus dem Magazin Popular Science, Ausgabe Januar 1978, Seite 66, ist ein sogenannter Cyclopian Truck bekannt, bei dem eine Konsole des Fahrzeugs von einem Bodenbereich aus-gehend zur Scheibenmitte geführt ist und dort eine Drehachse für eine mehrflügelige Scheibenwischeranordung ausbildet. An der Konsole ist ferner ein Lenkrad und weitere Bedienelemente angeordnet.

Vor diesem Hintergrund liegt der Erfindung die Aufgabe zugrunde, eine Anordnung eines Scheibenwischers zu schaffen, so dass bei sehr flach geneigter Scheibe der vordere Scheibenbereich mit dem Scheibenwischer gewischt werden kann, wobei im Sichtfeld der Fahrgäste möglichst wenig von einer zum Scheibenwischer zugehörigen Antriebsbaugruppe mit Antriebsmotor und Antriebsgestänge sichtbar ist.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Die erfindungsgemäße Anordrung eines Scheibenwischers an einem Fahrzeug weist einen Tragarm auf, welcher an seinem proximalen Ende am Fahrzeugdach angebracht ist, am distalen Ende freitragend ist und am distalen Ende eine Drehachse aufweist, an welcher ein Scheibenwischer montiert ist. Dadurch ist es möglich, den vorderen Scheibenbereich mit dem Scheibenwischer zu reinigen, wobei der Tragarm die Distanz zwischen Fahrzeugdach und Drehachse des Scheibenwischers überbrückt. Die erforderlichen Baugruppen wie Antriebsgestänge und Antriebsmotor lassen sich in einer Zone nahe beim Tragarm oder im Tragarm montieren, wobei diese Zone im hinteren Bereich der Scheibe liegt. Somit ergibt sich keine Behinderung des Sichtfeldes für einen Fahrgast. Weil der Tragarm am Fahrzeugdach montiert und an seinem distalen Ende freitragend ist, wird die Glasscheibe im Bereich der Aussparung nicht belastet. Damit besteht keine Gefahr, dass wegen zu starker Kräfte und Momente (z.B. bei Schneelast) der Bereich um die Aussparung der Scheibe zu stark belastet wird und ein Bruch der Scheibe die Folge wäre.

Nach erfindungsgemäßer Ausführungsform durchdringt dabei die Drehachse die zu wischende Scheibe durch eine Aussparung durch die Scheibe. Damit ist es möglich, die Drehachse vom Fahrzeuginnenraum aus anzutreiben.

Zudem kann bevorzugt vorgesehen sein, dass der Tragarm im Innenraum des Fahrzeuges angeordnet ist. Der Tragarm und die empfindlichen Bauelemente wie Gestänge und Antriebsmotor sind damit vor äußeren Witterungseinflüssen sicher geschützt.

Nach einer weiteren Ausführungsform ist die Drehachse mittels eines Dichtelementes mit der Glasscheibe verbunden. Dies ist vorteilhaft, da somit die Aussparung der Scheibe gegen von außen einwirkenden Schmutz oder Nässe abgedichtet ist.

Nach einer weiteren Ausführungsform ist zwischen Dichtelement und Drehachse eine Zwischenscheibe vorgesehen. Damit bleibt es freigestellt, ob das Dichtelement beweglich oder starr ausgebildet ist.

Nach einer weiteren Ausführungsform ist die Zwischenscheibe mit der Glasscheibe starr verbunden. Somit gibt es keine Bewegung auf der Glasoberfläche, welche eventuell uneben ist oder sich relativ rasch abnutzen kann.

Nach einer weiteren Ausführungsform ist das Dichtelement Klebstoff. Der Klebstoff fixiert nicht nur die Zwischenscheibe mit der Glasscheibe, sondern übernimmt auch eine dämpfende Funktion.

Nach einer weiteren Ausführungsform ist die Drehachse mittels eines Dichtungsflansches mit der Zwischenscheibe verbunden. Dies ermöglicht eine optimale Anpassung zwischen zwei zueinander abzudichtenden Teilen, wobei die Scheibe starr und der Flansch drehbar ausgebildet sein kann.

Nach einer weiteren Ausführungsform ist zwischen Dichtungsflansch und Zwischenscheibe eine Axialdichtung vorgesehen. Dies ermöglicht eine wirksame Abdichtung gegenüber von außen einwirkender Nässe oder Schmutzpartikeln.

Gemäß einer weiteren Ausführungsform kann zwischen Dichtungsflansch und Zwischenscheibe eine Labyrinthdichtung vorgesehen sein. Die Labyrinthdichtung ist eine berührungsfreie Schutzdichtung, wobei die Dichtfunktion durch eine Fluiddrosselung im Labyrinthspalt erreicht wird.

Nach einer weiteren Ausführungsform ist die Labyrinthdichtung der Axialdichtung vorgeschaltet. Von außen einwirkende Nässe muss somit zunächst die Labyrinthdichtung durchdringen, bevor sie die Axialdichtung erreicht. Bei dieser Ausführungsform wird somit eine sehr wirksame Abdichtung erzielt.

Nach einer weiteren Ausführungsform ist durch die Aussparung der Glasscheibe eine Leitung für die Scheibenreinigungsflüssigkeit nach außen durchführbar. Im Zusammenwirken mit dem Scheibenwischer lässt sich somit eine effektive Scheibenreinigung erzielen.

Nach einer weiteren Ausführungsform ist die Drehachse mit einem Antriebsgestänge und einem Antriebsmotor verbunden, so dass die Drehachse antreibbar ist. Je nach Dimensionierung des Gestänges kann somit das Wischfeld variabel gestaltet werden.

Gemäß einer weiteren Ausführungsform ist die Anordnung zum Fahrgastinnenraum mittels einer Abdeckung abgedeckt. Damit wird ein Sichtschutz und ein Berührschutz für die Fahrgäste erreicht.

Gemäß einer weiteren Ausführungsform ist ein Monitor mit der Abdeckung der erfindungsgemäßen Anordnung verbunden. Der Monitor kann somit in einem genügenden Abstand vom Fahrgast angeordnet werden, so dass auch in der ersten Sitzreihe die Anzeige des Monitors vom Fahrgast gut eingesehen werden kann. Würde der Monitor im Bereich des Fahrzeugdaches montiert, wäre der Abstand zwischen Fahrgast und Monitor zu kurz.

Gemäß einer weiteren Ausführungsform ist das Fahrzeug, welches die Anordnung aufweist, ein Omnibus. Damit ist bei der Anordnung eine Panoramascheibe vorsehbar.

Im Folgenden wird die Erfindung anhand bevorzugter Ausführungsformen mit Bezugnahme auf die Zeichnung erläutert. In der Zeichnung zeigen:
Figur 1 eine schematische Darstellung eines Fahrzeuges mit einer Scheibe und dem Sichtfeld eines Fahrgastes,
Figur 2 eine schematische Darstellung gemäß einer Ausführungsform der Erfindung,
Figur 3 eine schematische Querschnittsdarstellung im Bereich der Drehachse der Anordnung gemäß einer Ausführungsform der Erfindung,
Figur 4 eine schematische Darstellung einer weiteren Ausführungsform der erfindungsgemäßen Anordnung im Bereich der Drehachse des Scheibenwischers.

In den Figuren sind für gleiche Teile gleiche Bezugszeichen verwendet.

In Figur 1 ist schematisch ein Fahrzeug dargestellt, welches eine obere Glasscheibe 1 und eine Fahrerscheibe 2 aufweist. Die Scheibe 1 ist sehr flach zur Horizontalen geneigt, wobei sie eine Scheibenlänge L aufweist. Die Scheibe 1 weist einen vorderen Bereich 1a und einen hinteren Bereich 1b auf. Der vordere Bereich 1a liegt im Sichtfeld ϕ des Fahrgastes F, welches dieser von seinem Augenpunkt aus erfassen kann. Die Scheibe 1 ist zum einen vom Fahrzeugdach 3 und zum anderen vom vorderen Karosserierahmen 4 umgeben. Die Scheibe 1 weist eine Frontfläche auf, durch welche der Fahrgast auf die vor dem Fahrzeug sich befindende Straße blicken kann. Vorzugsweise ist die Scheibe 1 auch so ausgebildet, dass sie neben der Frontfläche auch zwei Seitenflächen aufweist. Somit kann der Fahrgast auch den zur linken und rechten Seite benachbarten Bereich der Straße einsehen.

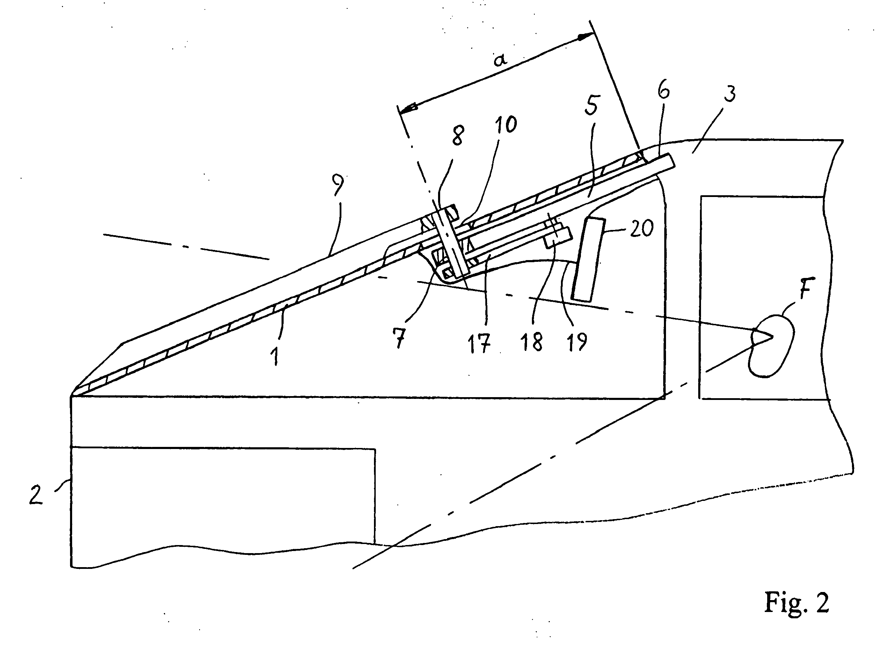

Eine Scheibenreinigung ist vorzugsweise im Bereich 1a erforderlich. Dies wird mit einem Scheibenwischer erzielt, welcher gemäß der Erfindung gelagert ist. In Figur 2 ist eine Ausführungsform der erfindungsgemäßen Anordnung dargestellt. Die Anordnung weist einen Tragarm 5 auf, welcher im Fahrzeuginnenraum angeordnet und an seinem proximalen Ende 6 am Fahrzeugdach 3 angebracht ist. Der Tragarm 5 ragt ohne weitere Stütze und somit freitragend in die Richtung zum vorderen Bereich 1a der Scheibe 1. An seinem distalen Ende 7 ist eine Drehachse 8 angebracht, an welche der Scheibenwischer 9 montiert ist. Die Drehachse 8 durchdringt die zu wischende Scheibe 1 durch eine Aussparung 10 durch die Scheibe 1. Da der Tragarm 5 freitragend ist, stützt er sich nicht im Bereich der Aussparung 10 der Scheibe 1 ab. Damit wird die Scheibe 1 durch vom Wischarm induzierte Kräfte und Momente nicht belastet. Die Kraft- und Momentenaufnahme geschieht ausschließlich im Übergangsbereich des proximalen Endes 6 mit dem Fahrzeugdach 3.

Das in Figur 2 dargestellte Antriebsgestänge 17 und der Antriebsmotor 18 für den Scheibenwischer 9 kann vorzugsweise derart angeordnet sein, dass es sich im Bereich des Tragarmes 5 befindet. Damit kann eine geringe Bauhöhe erzielt werden. Die Länge des Tragarmes 5 kann so gestaltet sein, dass mit dem Scheibenwischer 9 der gesamte vordere Bereich 1a der Scheibe 1 wischen kann. Die Länge des Tragarms 5 ist grundsätzlich beliebig, so dass sich die Position der Aussparung 10 in der Glasscheibe 1 aus der Länge des Tragarmes 5 und der Länge des Scheibenwischers 9 ergibt. Der Tragarm 5 kann zusammen mit dem Antriebsgestänge 17 und dem Antriebsmotor 18 mit einer Abdeckung 19 abgedeckt werden. Vorzugsweise befindet sich diese Abdeckung nicht mehr im direkten Sichtfeld ϕ des Fahrgastes F. Bei einer besonderen Ausführungsform kann diese Abdeckung selbst durch einen Monitor abgedeckt werden, welcher mit der Abdeckung verbunden ist. Der Monitor 20, z.B. ein Flachbildschirm, ist mit seiner Anzeigeseite in Richtung zum Fahrgastinnenraum orientiert. Der Monitor kann dazu verwendet werden, um den Fahrgästen Sicherheitshinweise oder ein Fernsehbild zur Unterhaltung anzuzeigen.

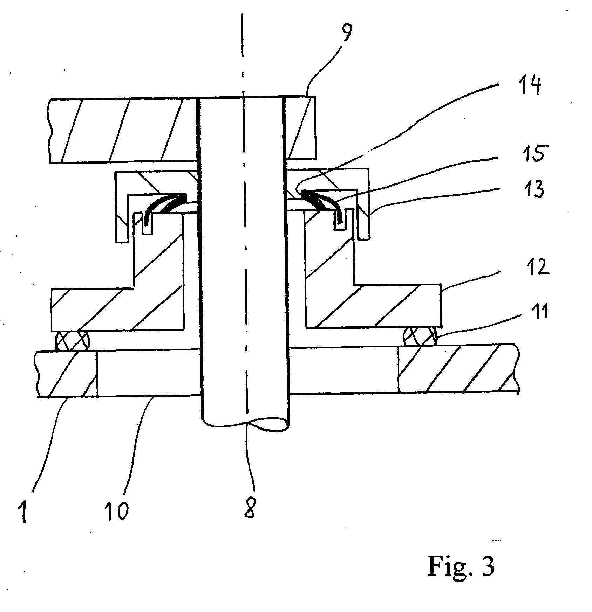

In Figur 3 ist ein Detail der erfindungsgemäßen Anordnung dargestellt. Die Drehachse 8 passiert die Aussparung 10 der Glasscheibe 1, wobei die Drehachse 8 senkrecht zur Glasscheibe 1 orientiert ist. Oberhalb der Glasscheibe 1 ist eine Zwischenscheibe 12 angeordnet, welche in ihrem äußeren Randbereich mit einem Dichtelement 11 versehen ist. Vorzugsweise ist dieses Dichtelement 11 ein Klebstoff, welcher die Position der Zwischenscheibe 12 mit der Glasscheibe 1 fixiert und gleichzeitig eine Dämpfungsfunktion übernimmt. Erschütterungen des Fahrzeugs werden somit nicht direkt von der Glasscheibe 1 auf die Zwischenscheibe 12 übertragen.

Die Zwischenscheibe 12 weist einen Bund auf, an dessen Stirnseite zwei Dichtungen vorgesehen sind. Gemäß der in Figur 3 dargestellten Ausführungsformen ist eine Labyrinthdichtung 15 und eine Axialdichtung 14 vorgesehen. Beide Dichtungen sind in einem Dichtungsflansch 13 untergebracht, wobei der Dichtungsflansch 13 mit der Drehachse 8 fest verbunden ist. Bei einer rotierenden Drehachse 8 bewegen sich somit der Dichtungsflansch 13, die Axialdichtung 14 und die Labyrinthdichtung 15, wobei die Dichtungen an der Stirnseite des Bundes der Zwischenscheibe 12 angreifen. Vorzugsweise umgreift der Dichtungsflansch den Zwischenscheibenbund, wodurch ein Eindringen von Flüssigkeit bis zu den Dichtungen erschwert wird.

Die Labyrinthdichtung ist in dieser Ausführungsform axial ausgeführt. Bei der Labyrinthdichtung handelt es sich um eine berührungsfreie Dichtung, bei der das Dichtmaterial in einen Spalt eingreift, welcher im Bund der Zwischenscheibe eingearbeitet ist. Bei einer Rotation der Drehachse kommt es bei korrekter Justage der Labyrinthdichtung zu keinem Verschleiß der Dichtung, wodurch eine hohe Zuverlässigkeit in der Dichtwirkung erreicht wird. Die Axialdichtung ist näher zur Drehachse orientiert und berührt schleifend den Bund der Schutzscheibe 12. Dieses Dichtsystem verhindert zuverlässig das Eindringen von Schmutz oder Nässe in den Lagerbereich der Anordnung und damit in den Innenraum des Fahrzeuges. Am Ende der Drehachse 8 ist die Aufnahme für den Scheibenwischer 9 angebracht.

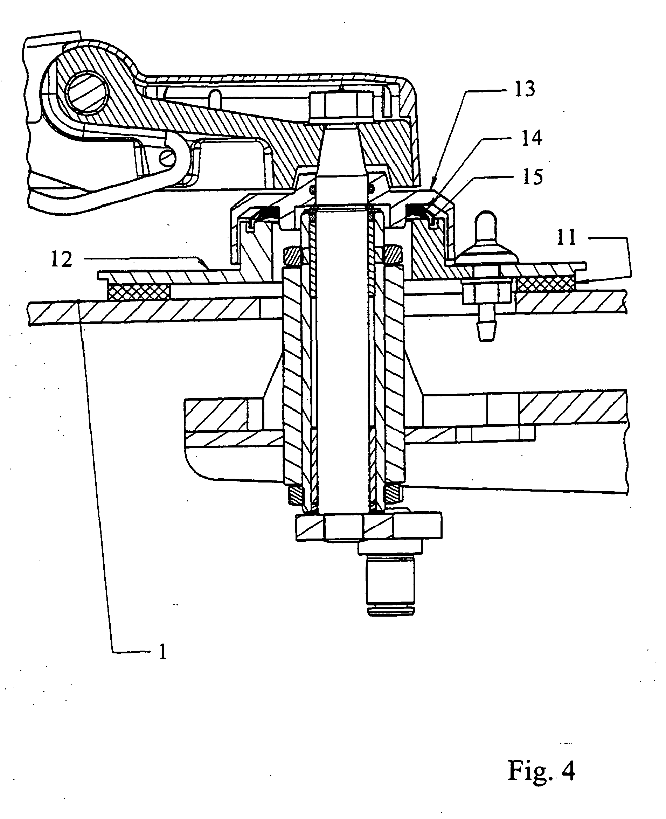

In Figur 4 ist eine weitere Ausführungsform der Erfindung dargestellt. Zusätzlich zur Drehachse, dem Dichtungssystem und der Glasscheibe ist eine Leitung 16 angebracht, welche durch die Aussparung der Glasscheibe 1 hindurch eine Scheibenreinigungsflüssigkeit nach außen auf die Scheibe führen kann. Damit ist eine wirksame Reinigung der Scheibe 1 im Zusammenwirken mit dem Scheibenwischer 9 erreichbar. Die Leitung 16 ist bei dieser Ausfiihrungsform mit der Zwischenscheibe 12 montiert.

### Bezugszeichen

- 1: Glasscheibe
- 1a: vorderer Bereich der Glasscheibe
- 1b: hinterer Bereich der Glasscheibe
- 2: Fahrerscheibe
- 3: Fahrzeugdach
- 4: vorderer Karosserierahmen
- 5: Tragarm
- 6: proximales Ende des Tragarmes
- 7: distales Ende des Tragarmes
- 8: Drehachse
- 9: Scheibenwischer
- 10: Aussparung der Glasscheibe
- 11: Dichtelement
- 12: Zwischenscheibe
- 13: Dichtungsflansch
- 14: Axialdichtung
- 15: Labyrinthdichtung
- 16: Leitung für Scheibenreinigungsflüssigkeit
- 17: Antriebsgestänge
- 18: Antriebsmotor
- 19: Abdeckung
- 20: Monitor
- 30: Fahrzeug
- F: Fahrgast
- L': Länge der Scheibe 1
- a: freie Tragarmlänge
- ϕ: Sichtfeld

## Patentansprüche

1. Anordnung eines Scheibenwischers (9) an einem Fahrzeug (30), mit einer Vorrichtung zur Lagerung des Scheibenwischers (9), welche einen Tragarm (5) aufweist, welcher am proximalen Ende (6) am Fahrzeugdach (3) angebracht ist und am distalen Ende (7) freitragend ist und am distalen Ende (7) eine Drehachse (8) aufweist, an welcher der Scheibenwischer (9) montiert ist, wobei die Drehachse (8) die zu wischende Scheibe (1) durch eine Aussparung (10) durch die Scheibe (1) durchdringt und die Aussparung (10) durch die Scheibe (1), bezogen auf eine Seitenansicht des Fahrzeugs, in einem Abstand von einem Drittel bis der Hälfte der Länge der Scheibe (1) von einem fahrzeugdachseitigen Rand der Scheibe (1) ausgehend vorgesehen ist.

2. Anordnung nach Anspruch 1, wobei der Tragarm (5) im Innenraum des Fahrzeuges (30) angeordnet ist.

3. Anordnung nach Anspruch 1 order 2, wobei die Drehachse (8) mittels eines Dichtelementes (11) mit der Scheibe (1) verbunden ist.

4. Anordnung nach Anspruch 3, wobei zwischen Dichtelement (11) und Drehachse (8) eine Zwischenscheibe (12) vorgesehen ist.

5. Anordnung nach Anspruch 4, wobei die Zwischenscheibe (12) mit der Scheibe (1) starr verbunden ist.

6. Anordnung nach Anspruch 5, wobei das Dichtelement (11) Klebstoff ist.

7. Anordnung nach den Ansprüchen 4 bis 6, wobei die Drehachse (8) mittels eines Dichtungsflansches (13) mit der Zwischenscheibe (12) verbunden ist.

8. Anordnung nach Anspruch 7, wobei zwischen Dichtungsflansch (13) und Zwischenscheibe (12) eine Axialdichtung (14) vorgesehen ist.

9. Anordnung nach den Ansprüchen 7 oder 8, wobei zwischen dem Dichtungsflansch (13) und der Zwischenscheibe (12) eine Labyrinthdichtung (15) vorgesehen ist.

10. Anordnung nach Anspruch 9, wobei der Labyrinthdichtung (15) die Axialdichtung (14) vorgeschaltet ist.

11. Anordnung nach den Ansprüchen 1 bis 10, wobei durch die Aussparung (10) der Scheibe (1) eine Leitung (16) für eine Scheibenreinigungsflüssigkeit nach außen durchführbar ist.

12. Anordnung nach einem der Ansprüche 1 bis 11, wobei die Drehachse (8) mit einem Antriebsgestänge (17) und einem Antriebsmotor (18) verbunden ist, so dass die Drehachse (8) antreibbar ist.

13. Anordnung nach den Ansprüchen 1 bis 12, wobei die Vorrichtung zum Fahrgastinnenraum mittels einer Abdeckung (19) abgedeckt ist.

14. Anordnung nach Anspruch 13, wobei ein Monitor (20) mit der Abdeckung (19) verbunden ist.

15. Anordnung nach den Ansprüchen 1 bis 14, wobei das Fahrzeug (30) ein Omnibus ist.

## Claims

1. Arrangement of a wiper (9) on a vehicle (30), with a device for supporting the wiper (9), which device has a supporting arm (5) which is fitted at the proximal end (6) to the vehicle roof (3) and is self-supporting at the distal end (7) and, at the distal end (7), has a rotary spindle (8) on which the wiper (9) is mounted, wherein the rotary spindle (8) passes through the window (1) to be wiped through a cutout (10) through the window (1) and the cutout (10) through the window (1) is provided, with reference to a side view of the vehicle, at a distance of one third to half the length of the window (1) from an edge of the window (1) on the vehicle-roof side.

2. Arrangement according to Claim 1, wherein the supporting arm (5) is arranged in the interior of the vehicle (30).

3. Arrangement according to Claim 1 or 2, wherein the rotary spindle (8) is connected to the window (1) by means of a sealing element (11).

4. Arrangement according to Claim 3, wherein an intermediate washer (12) is provided between the sealing element (11) and rotary spindle (8).

5. Arrangement according to Claim 4, wherein the intermediate washer (12) is connected rigidly to the window (1).

6. Arrangement according to Claim 5, wherein the sealing element (11) is an adhesive.

7. Arrangement according to Claims 4 to 6, wherein the rotary spindle (8) is connected to the intermediate washer (12) by means of a sealing flange (13).

8. Arrangement according to Claim 7, wherein an axial seal (14) is provided between the sealing flange (13) and intermediate washer (12).

9. Arrangement according to Claims 7 or 8, wherein a labyrinth seal (15) is provided between the sealing flange (13) and the intermediate washer (12).

10. Arrangement according to Claim 9, wherein the axial seal (14) is connected upstream of the labyrinth seal (15).

11. Arrangement according to Claims 1 to 10, wherein a line (16) for a window cleaning fluid can be passed to the outside through the cutout (10) in the window (1).

12. Arrangement according to one of Claims 1 to 11, wherein the rotary spindle (8) is connected to a driving linkage (17) and a driving motor (18), and therefore the rotary spindle (8) can be driven.

13. Arrangement according to Claims 1 to 12, wherein the device is covered with respect to the passenger compartment by means of a cover (19).

14. Arrangement according to Claim 13, wherein a monitor (20) is connected to the cover (19).

15. Arrangement according to Claims 1 to 14, wherein the vehicle (30) is a bus/coach.

## Revendications

1. Disposition d'essuie-glace (9) sur un véhicule (30), avec un dispositif pour supporter l'essuie-glace (9), qui présente un bras porteur (5) qui est installé à son extrémité proximale (6) sur le toit de véhicule (3) et est librement porteur à son extrémité distale (7) et qui présente à l'extrémité distale (7) un axe de rotation (8) sur lequel l'essuie-glace (9) est monté, dans laquelle l'axe de rotation (8) traverse la vitre à essuyer (1) par une découpe (10) à travers la vitre (1) et la découpe (10) à travers la vitre (1) est prévue, par rapport à une vue latérale du véhicule, à une distance d'un tiers à une moitié de la longueur de la vitre (1) à partir d'un bord côté toit de véhicule de la vitre (1).

2. Disposition selon la revendication 1, dans laquelle le bras porteur (5) est disposé dans l'espace intérieur du véhicule (30).

3. Disposition selon la revendication 1 ou 2, dans laquelle l'axe de rotation (8) est assemblé à la vitre (1) au moyen d'un élément d'étanchéité (11).

4. Disposition selon la revendication 3, dans laquelle il est prévu une rondelle intermédiaire (12) entre l'élément d'étanchéité (11) et l'axe de rotation (8).

5. Disposition selon la revendication 4, dans laquelle la rondelle intermédiaire (12) est rigidement assemblée à la vitre (1).

6. Disposition selon la revendication 5, dans laquelle l'élément d'étanchéité (11) est un adhésif.

7. Disposition selon les revendications 4 à 6, dans laquelle l'axe de rotation (8) est assemblé à la rondelle intermédiaire (12) au moyen d'une bride d'étanchéité (13).

8. Disposition selon la revendication 7, dans laquelle il est prévu un joint d'étanchéité axial (14) entre la bride d'étanchéité (13) et la rondelle intermédiaire (12).

9. Disposition selon les revendications 7 ou 8, dans laquelle il est prévu un joint à labyrinthe (15) entre la bride d'étanchéité (13) et la rondelle intermédiaire (12).

10. Disposition selon la revendication 9, dans laquelle le joint d'étanchéité axial (14) est placé avant le joint à labyrinthe (15).

11. Disposition selon les revendications 1 à 10, dans laquelle une conduite (16) destiné à un liquide de nettoyage de vitre peut être menée vers l'extérieur à travers la découpe (10) de la vitre (1).

12. Disposition selon l'une quelconque des revendications 1 à 11, dans laquelle l'axe de rotation (8) est relié à une tringlerie d'entraînement (17) et à un moteur d'entraînement (18), de telle manière que l'axe de rotation (8) puisse être entraîné.

13. Disposition selon les revendications 1 à 12, dans laquelle le dispositif est recouvert d'un couvercle (19) vers l'intérieur de l'habitacle.

14. Disposition selon la revendication 13, dans laquelle un moniteur (20) est assemblé au couvercle (19).

15. Disposition selon les revendications 1 à 14, dans laquelle le véhicule (30) est un autobus.
